# FASCICULE DE BREVET EUROPEEN

(11) **EP 3 073 132 B1**
(45) Date de publication et mention de la délivrance du brevet: **26.02.2020**
(21) Numéro de dépôt: 16160676.9
(22) Date de dépôt: 16.03.2016
(51) Int. Cl.: F16B 45/02

(54) **MOUSQUETON**
KARABINERHAKEN
CARABINER

(30) Priorité: 24.03.2015 FR 1552409
(43) Date de publication de la demande: 28.09.2016
(73) Titulaire: Zedel, 38920 Crolles (FR)
(72) Inventeur: MOINE, Julien, 38660 La Terrasse (FR); BERGEZ, Aurélie, 38610 Gières (FR)
(74) Mandataire: Talbot, Alexandre

(56) Documents cités:
- EP-A1- 2 538 095
- WO-A1-2005/073571
- GB-A- 2 481 800
- US-A1- 2013 104 374

## Description

### Domaine technique de l'invention

L'invention est relative à un mousqueton utilisé dans le domaine de l'escalade et des travaux en hauteur.

### État de la technique

Les mousquetons sont couramment utilisés dans le domaine de l'escalade et des activités professionnelles nécessitant d'être encordé. On les utilise par exemple pour connecter un dispositif de sécurité au pontet d'un harnais d'encordement ou à une paroi.

Les mousquetons ont généralement une forme asymétrique, une zone du mousqueton étant spécialement adaptée pour coopérer avec un dispositif de sécurité, tandis qu'une autre zone est plus adaptée pour l'utilisation d'une corde par exemple.

Toutefois, au cours de l'utilisation, il n'est pas rare que le mousqueton tourne sur lui même, par exemple lorsqu'un utilisateur assure un tiers escaladant une paroi. En effet, en cours d'assurage, le système d'assurage composé du mousqueton et du dispositif de sécurité bouge au fur et à mesure que l'utilisateur fait coulisser le dispositif de sécurité le long de la corde d'assurage. Dès lors, la position relative du dispositif de sécurité par rapport au mousqueton peut être modifiée, et nuire au bon fonctionnement du système d'assurage.

Pour remédier à ce problème, certains mousquetons peuvent être dotés d'une barrette fixée au mousqueton pour séparer l'espace défini à l'intérieur du mousqueton en deux zones distinctes. Son rôle est d'empêcher le mouvement d'un dispositif - par exemple un dispositif de sécurité - au delà de la zone définie par la barrette.

Certains mousquetons possèdent une barrette montée mobile en rotation par rapport au corps de la barrette, et bloquent le doigt du mousqueton de sorte à empêcher son ouverture intempestive. Toutefois, ce type de dispositif présente l'inconvénient d'être volumineux, et de ne pas être pratique car il n'y a plus de séparation de l'espace défini à l'intérieur du mousqueton lorsque ce dernier est dans une position ouverte.

D'autres mousquetons munis d'une barrette sont connus. Certaines barrettes sont fixées au mousqueton par l'une de leurs extrémités, par exemple en introduisant au moins l'une des extrémités dans un trou réalisé dans le mousqueton. Comme une ou plusieurs ouvertures ont été réalisées dans le mousqueton, ce dernier peut être fragilisé et il est nécessaire de prendre des précautions particulières pour mettre en œuvre son procédé de fabrication.

La barrette peut éventuellement être couplée à un ressort pour que cette dernière soit replacée dans une position prédéterminée après avoir été déplacée.

Lorsque la barrette n'est fixée qu'à une seule de ses extrémités au mousqueton, la connexion d'un dispositif au mousqueton est facilitée, mais l'inconvénient est que ce dispositif peut aussi partir par inadvertance de la zone prédéfinie par la barrette.

Le fait de réaliser un trou dans le mousqueton pour loger l'extrémité de la barrette peut également être préjudiciable. Cela peut en effet conduire à sa fragilisation si cela n'est pas réalisé avec le degré de précision adéquat. Le document WO2005/073571 divulgue un mousqueton comprenant une barrette de séparation.

### Objet de l'invention

Un objet de l'invention consiste à prévoir un mousqueton configuré pour coopérer avec un dispositif de sécurité maintenu de manière permanente dans une zone prédéfinie du mousqueton. A cet effet, le mousqueton comporte :
- un corps métallique,
- un doigt monté mobile en rotation à une première extrémité du corps métallique entre une position fermée et une position ouverte du mousqueton, le doigt étant en contact avec une deuxième extrémité du corps métallique lorsque le mousqueton est en position fermée,
- une barrette de séparation fixée au corps métallique et configurée de manière à définir deux zones de confinement distinctes.

La barrette est montée sur le corps métallique en des première et deuxième extrémités opposées de la barrette. Les première et deuxième extrémités comportent respectivement des premier et deuxième organes de fixation entourant le corps métallique. Le premier organe de fixation et le deuxième organe de fixation entourent complètement une section du corps métallique. Le premier organe de fixation est configuré pour que la première extrémité de barrette de séparation soit montée clipsable sur le corps métallique. Le deuxième organe de fixation est configuré pour que la deuxième extrémité de barrette de séparation soit montée clipsable sur le corps métallique ou le deuxième organe de fixation définit un anneau dépourvu de moyen d'ouverture dudit anneau

La barrette de séparation est par ailleurs configurée pour autoriser l'ouverture du doigt lorsque les premier et deuxième organes de fixation entourent le corps métallique.

Selon un aspect de l'invention, le premier et/ou le deuxième organes de fixation sont monoblocs pour gagner en compacité.

Selon un autre aspect de l'invention, le premier organe de fixation comporte un premier évidement et une première entrée apte à permettre l'introduction du corps métallique dans le premier organe de fixation de sorte à permettre le clipsage de la barrette sur le corps métallique par déformation élastique du premier organe de fixation.

Il est avantageux de prévoir que la barrette comporte au moins un premier trou d'axe orthogonal à la première entrée et dans lequel le mousqueton comporte au moins un premier élément de connexion apte à coopérer avec le premier trou de sorte à fermer la première entrée et maintenir fixement la barrette sur le corps métallique.

Pour assurer une bonne tenue mécanique, il est intéressant de prévoir que la première entrée est définie par une fente faisant face à une partie interne du corps métallique.

Dans une variante de réalisation, le deuxième organe de fixation comporte un deuxième évidement et une deuxième entrée apte à permettre l'introduction du corps métallique dans le deuxième organe de fixation, de sorte à permettre le clipsage de la barrette sur le corps métallique par déformation élastique du deuxième organe de fixation.

Il est possible de prévoir que les premier et deuxième éléments de connexion sont choisis parmi les vis, les rivets, les goujons à sertir ou une zone en saillie disposée d'un premier côté des première et/ou deuxième entrées et configurées pour coopérer avec un trou disposé dans un deuxième côté opposé des première et/ou deuxième entrées.

Il est encore possible d'envisager que les premier et/ou deuxième organes de fixation sont munis d'un dispositif anti-rotation relativement au corps métallique. Plus particulièrement, il est intéressant de prévoir que les premier et/ou deuxième organes de fixation comportent respectivement des premier et deuxième évidements ayant une forme complémentaire de celle du corps métallique.

La barrette comporte en outre une partie centrale connectant les premier et deuxième organes de fixation, la partie centrale pouvant être configurée pour servir d'appui à l'élément de verrouillage lorsque l'élément de verrouillage est en butée contre une partie centrale du corps métallique.

L'invention concerne également un système d'assurage doté d'un assureur et d'un mousqueton comportant les caractéristiques précitées.

L'invention concerne enfin un procédé de mise en place d'un dispositif de sécurité sur un mousqueton possédant les caractéristiques précitées. Le procédé peut comporter les étapes suivantes :
- fournir le mousqueton connecté à un trou de connexion du dispositif de sécurité,
- introduire le corps métallique dans les premier et deuxième organes de fixation de sorte à clipser la barrette sur le mousqueton et confiner le dispositif de sécurité dans une zone prédéfinie.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 illustre la manière dont la barrette est clipsée sur le corps métallique du mousqueton,
- la figure 2 représente le mousqueton après que la barrette ait été mise en place,
- les figures 3 à 5 représentent de manière détaillée la barrette clipsable,
- la figure 6 présente un système d'assurage doté d'un mousqueton selon l'invention.

### Description détaillée

Les mousquetons utilisés dans le domaine de l'escalade servent à relier au moins deux dispositifs entre eux, de sorte à assurer la sécurité d'un utilisateur. Ils peuvent par exemple servir à connecter le pontet d'un harnais d'encordement et un dispositif d'assurage.

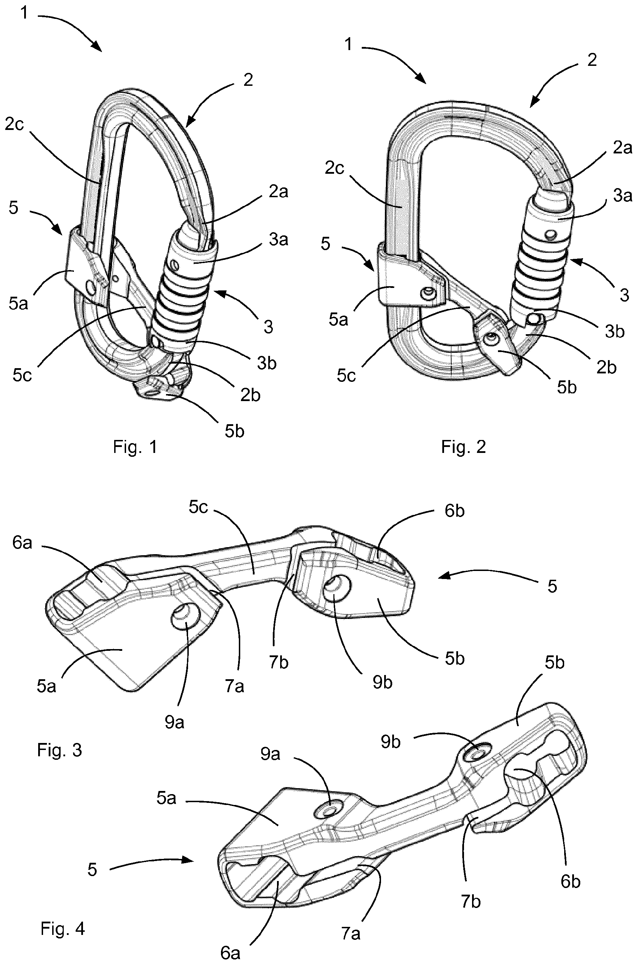

Un mousqueton 1, tel que celui représenté aux figures 1 et 2, comprend un corps métallique 2 ayant une forme de C, et un doigt 3 monté mobile en rotation et destiné à fermer le mousqueton. Une première extrémité 3a du doigt 3 est montée mobile en rotation au niveau d'une première extrémité 2a du corps métallique 2 suivant un axe orthogonal à un plan défini par le mousqueton 1 par exemple le corps métallique 2 ou le plan contenant le déplacement du doigt. Une deuxième extrémité 3b du doigt 3 est en contact avec une deuxième extrémité 2b du corps métallique 2 lorsque le mousqueton 1 est dans la position fermée. Le doigt 3 peut également adopter de multiples positions d'ouverture afin de permettre l'introduction d'un dispositif d'assurage ou d'une corde par exemple. La position d'ouverture maximale correspond à celle où la deuxième extrémité 3b du doigt 3 peut toucher une partie centrale 2c du corps métallique 2. Un ressort de rappel (non représenté) ramène le doigt 3 dans la position fermée du mousqueton 1, de sorte que sans l'application d'une force extérieure le mousqueton 1 est en position fermée.

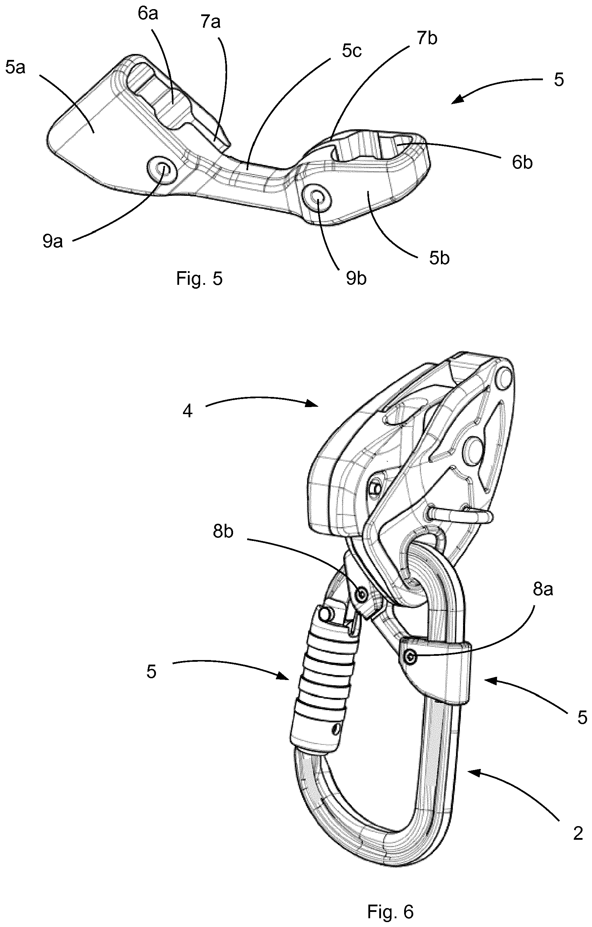

De manière générale, la forme d'un mousqueton 1 est adaptée pour une utilisation donnée, et celle-ci ne présente généralement pas de plan de symétrie qui soit sécant à au plan défini précédemment. Dès lors, la connexion entre un mousqueton 1 et un dispositif de sécurité 4 (tel que l'assureur représenté à la figure 5) doit être réalisée dans une zone spécifique du mousqueton 1 afin de l'utiliser dans des conditions de sécurité optimales.

Pour confiner le dispositif de sécurité 4 dans une zone prédéfinie, une barrette 5 est fixée sur le corps 2 du mousqueton 1 avantageusement par clipsage. Le clipsage est réalisé à au moins une des extrémités de la barrette 5 pour se fixer sur le corps métallique 2. En d'autres termes, la barrette de séparation 5 est fixée au corps 2 et définit deux zones de confinement distinctes.

La barrette 5 est de préférence réalisée de manière monobloc pour améliorer sa compacité.

La barrette 5 comporte un premier organe de fixation 5a placé à une première extrémité et un deuxième organe de fixation 5b placé à une deuxième extrémité opposée. Les premier et deuxième organes de fixation 5a et 5b sont séparés par une partie centrale 5c et entourent un section du corps 2.

Le premier organe de fixation 5a et/ou le deuxième organe de fixation 5b entourent complètement le corps métallique 2. En entourant complètement le corps métallique, l'organe de fixation est plus solide et sa durée de vie est améliorée. Si les deux organes de fixation entourent complètement le corps métallique, la rotation de la barrette par rapport au mousqueton est impossible en utilisation.

Selon un mode de réalisation particulier non représenté, la partie centrale 5c peut avoir une forme de U, et les premier et deuxième organes de fixation 5a et 5b peuvent être suffisamment larges, de sorte à confiner le dispositif de sécurité 4 dans une zone suffisamment restreinte pour empêcher ses mouvements le long du corps 2. Le dispositif de sécurité n'est alors mobile qu'en rotation par rapport au corps 2.

Une alternative de réalisation peut consister à utiliser une barrette de séparation 5 ayant une partie centrale 5c plane et des organes de fixation 5a et 5b tels que ceux représentés sur les figures, et d'ajouter une pièce amovible, montée à la fois sur la barrette 5 et sur le corps 2, de sorte à entraver les mouvements latéraux du dispositif de sécurité 4 et à autoriser ses mouvements de rotation relativement au corps 2.

L'utilisation d'un organe de fixation monobloc permet une meilleur compacité par rapport à un organe de fixation par exemple formé en deux parties ou plus, par exemple deux demi-coques.

Le premier et/ou le deuxième organes de fixation 5a, 5b sont préférentiellement monoblocs ce qui permet d'accroitre la solidité de la barrette et plus particulièrement de l'organe de fixation et également de faciliter le montage de la barrette en augmentant la compacité.

Le premier organe de fixation 5a comporte avantageusement un premier évidement 6a et une première entrée 7a apte à permettre l'introduction du corps métallique 2 jusqu'à ce qu'il arrive dans le premier évidement 6a. De même, il est avantageux de prévoir que le deuxième organe de fixation 5b comporte un deuxième évidement 6b et une deuxième entrée 7b permettant d'introduire le corps métallique 2 dans le deuxième évidement 6b (cf. figures 3 à 5). Ces deux organes de fixation sont chacun avantageusement configurés pour clipser la barrette sur le corps 2 par déformation électique. Avantageusement les première et deuxième entrées 7a et 7b sont définies pas des fentes dans un anneau entourant complètement le corps métallique. Ces deux fentes définissent deux plans qui sont préférentiellement coplanaires et encore plus préférentiellement situées toutes deux du même côté par rapport au plan médian de la barrette 5, c'est-à-dire toutes deux sur la même face de la barrette 5.

De manière avantageuse, le premier et/ou le deuxième organes de fixation sont configurés pour se déformer plastiquement et ainsi autoriser l'introduction du corps métallique à travers la fente.

L'utilisation d'un premier et/ou d'un deuxième organes de fixation munis d'une fente et déformables est particulièrement avantageux car cela facilite la formation d'un organe de fixation monobloc.

Si une fente est utilisée il est particulièrement avantageux de placer cette fente en face de la partie interne du corps 2 du mousqueton, c'est-à-dire dans la partie intérieure de l'espace délimitée par le corps 2. Il a été observé que le placement de la fente sur la partie externe du corps métallique 2 se traduit par une fragilisation accélérée de la barrette car la fente subit de nombreux chocs lors de son utilisation.

En position fermée, il est avantageux de prévoir que les deux côtés de la fente sont en contact pour une meilleure tenue mécanique.

Pour éviter toute ouverture intempestive du premier et/ou du deuxième organes de fixation de la barrette 5 sur le corps métallique 2, chaque entrée 7a et 7b peut être maintenue fermée par au moins un élément de connexion 8 (cf. figure 6). Cet élément de connexion peut par exemple être une pince enserrant les faces externes de la barrette 5 au voisinage des entrées 7a et 7b (mode de réalisation non représenté).

De manière avantageuse, des premier et/ou deuxième trous traversant 9a et 9b peuvent être réalisés au voisinage des première et deuxième entrées 7a et 7b, de sorte que des premier et/ou deuxième éléments de connexion 8a et 8b (cf. figure 6) tel que des vis, des rivets ou des goujons à sertir puissent coopérer avec les premier et deuxième trous traversant 9a et 9b et empêcher l'ouverture non intentionnelle des entrées 7a et 7b et maintenir fixement la barrette sur le corps 2. Dans un mode de réalisation particulier, les premier et deuxième éléments de connexion 8a et 8b s'étendent sur la totalité de la longueur des premier et deuxième trous traversant 9a et 9b. Les premier et deuxième trous traversant 9a et 9b peuvent également avoir des axes de révolution orthogonaux respectivement aux première et deuxième entrées 7a et 7b. Lorsque les entrées 7a et 7b sont coplanaires, les premier et deuxième trous traversant 9a et 9b peuvent être orthogonaux à ce plan.

La fermeture des première et deuxième entrées 7a et 7b permet de maintenir fixement la barrette 5 sur le corps métallique 2, et d'éviter tout déclipsage inattendu pouvant conduire à une mauvaise utilisation du dispositif connecté au mousqueton 1.

En variante de réalisation qui peut être combinée avec les modes de réalisation précédents, l'organe de fixation muni d'une entrée déformable par exemple une fente peut également est muni d'un système de clipsage avec une zone en saillie formée sur un premier côté de la fente et un trou formé dans le deuxième coté de la fente et coopérant avec la zone saillie pour assurer la fermeture de la fente par clipsage. Le système de clipsage peut être configuré pour former un point dur facilitant le maintien de la position fermée ou alors pour fermer de manière définitive l'organe de fixation.

Dans une variante de réalisation, le premier organe de fixation 5a ou le deuxième organe de fixation 5b est formé par un anneau dépourvu de moyen d'ouverture dudit anneau. Dans ce cas de figure, l'anneau n'est pas déformable et cet organe de fixation est monté en premier dans le mousqueton. En d'autres termes, la barrette comporte au moins un organe de fixation ouvrable afin de faciliter l'introduction du corps métallique tout en utilisant une barrette rigide

Selon les modes de réalisation, les premier et deuxième organes de fixation peuvent se déformer du même côté pour l'introduction du corps du mousqueton. Ce mode de réalisation est illustré sur les figures. En variante, les premier et deuxième organes de fixation peuvent se déformer selon des directions opposées, la barrette est alors placée dans l'espace interne définit par le corps 2 avec le clipsage.

Les premier et/ou deuxième organes de fixation 5a, 5b peuvent comporter des moyens d'anti-rotation de la barrette 5 par rapport au corps métallique 2. De cette manière, l'organe de fixation s'oppose intrinsèquement à la rotation de la barrette 5 sans solliciter particulièrement la partie centrale de la barrette ni l'organe de fixation opposé.

L'utilisation d'un ou deux organes de fixation munis de moyens d'anti-rotation permet de renforcer la tenue mécanique de la barrette.

Dans un mode de réalisation avantageux, la forme des premier et/ou deuxième évidements 6a et 6b peut être complémentaire de celle du corps métallique 2. Cela peut être particulièrement intéressant lorsque la section du corps métallique 2 n'est pas circulaire, comme dans le mode de réalisation illustré sur les figures 1, 2 et 6. Il convient également de noter que les organes de fixation 5a et 5b ne prennent pas appui sur le doigt 3.

Dans une variante de réalisation, le moyen d'anti-rotation est configuré pour autoriser la rotation dans une plage angulaire sensiblement égale à 10° de manière à autoriser le montage de la barrette sur un plus grand nombre de mousquetons.

Après avoir été positionné dans les premier et deuxième évidements 6a et 6b, le corps métallique 2 est entouré par les premier et deuxième organes de fixation 5a et 5b. Ces derniers présentent la propriété d'empêcher la rotation de la barrette 5 par rapport au corps métallique 2. Pour y parvenir, l'intérieur des premier et deuxième évidements 6a et 6b peut par exemple être recouvert d'un film antidérapant ou de rugosités destinées à empêcher les mouvements de la barrette 5 relativement au corps métallique 2.

La barrette 5 n'est jamais connectée au doigt 3. De cette façon, les deux zones distinctes définies par la barrette 5 sont maintenues même lorsque le mousqueton 1 est en position ouverte.

La forme de la barrette est avantageusement adaptée à la forme du corps métallique 2 sur lequel elle est fixée. Ainsi, lorsque le corps métallique 2 n'a pas une forme symétrique, la barrette 5 peut être montée sur le corps métallique 2 en un seul endroit. Une unique position de montage est possible.

Pour que la barrette 5 puisse être clipsée sans subir de déformation plastique pouvant entraîner sa fragilisation, il est avantageux que choisir un matériau ayant une valeur de déformation à la rupture adaptée, par exemple au moins 50%.

Le matériau formant la barrette est avantageusement choisi parmi les matériaux thermoplastiques injectables et plus particulièrement en polyamide. Le clipsage de la barrette 5 peut ainsi être réalisé par déformation élastique des deux organes de fixation 5a et 5b, pour installer et désinstaller la barrette sur le corps métallique 2.

Selon un autre aspect avantageux de l'invention, la barrette 5 n'entrave pas l'ouverture du mousqueton 1 en limitant l'amplitude de rotation du doigt 3. Lorsque l'élément de verrouillage 3 est en butée contre la partie centrale 2c du corps métallique 2, il vient en appui simultanément avec la partie centrale 5c de la barrette 5. Celle-ci joue alors le rôle de point d'appui pour le doigt 3, ce qui peut faciliter le maniement du mousqueton 1 par exemple lorsque l'utilisateur ne peut employer qu'une seule main pour connecter le mousqueton 1 à un élément extérieur tel qu'un point de relai.

L'invention concerne également un système d'assurage comportant un assureur 4 et un mousqueton 1 possédant les caractéristiques qui viennent d'être décrites (cf. figure 6). L'invention peut par exemple être utilisée dans le cadre d'une utilisation professionnelle pour effectuer des descentes en rappel de manière urgente. Dans ce cas, une corde peut être positionnée de manière permanente dans l'assureur 4, et ce dernier peut être placé sur le mousqueton 1 avant fixation de la barrette 5 sur le corps métallique 2. L'utilisateur peut donc avoir avec lui un matériel prêt à être employé en cas de nécessité.

Pour que l'utilisateur mette en place correctement le dispositif de sécurité 4 sur le mousqueton 1, les étapes suivantes doivent être réalisées :
- fournir le dispositif de sécurité 4 monté sur le mousqueton 1, le mousqueton passant à travers un trou de connexion du dispositif de sécurité
- introduire le corps métallique 2 à travers les première et deuxième entrées 7a et 7b, jusqu'à ce que le corps métallique 2 se positionne dans les premier et deuxième évidements 6a et 6b (cf. figure 1), de sorte à clipser la barrette 5 sur le mousqueton 1 et confiner le dispositif de sécurité 4 dans une zone prédéfinie,
- fermer les première et deuxième entrées 7a et 7b au moyen d'au moins un premier et un deuxième élément de connexion 8a et 8b.

De manière particulièrement avantageuse, le dispositif de sécurité est associé au mousqueton avant clipsage de la barrette 5 sur le corps 2. Dans un mode de réalisation particulier, un des organes de fixation est associé au corps 2 avant de monter le dispositif de sécurité. La fixation de l'autre organe de fixation est réalisation après avoir monté le dispositif de sécurité.

En suivant ces différentes étapes, le dispositif de sécurité 4 est maintenu dans la zone la plus adaptée pour garantir la sécurité de l'utilisateur.

Contrairement aux barrettes de l'art antérieur, la barrette 5 est rajoutée sur le corps métallique 2, ce qui facilite le procédé de fabrication du mousqueton 1 et évite sa fragilisation liée au perçage de trous de fixation dans le corps 2.

Ces différentes étapes peuvent être également réalisées pour la mise en place d'un dispositif de sécurité 4 tel qu'un assureur, une longe, une poulie ou un bloqueur.

## Revendications

1. Mousqueton (1) à barrette comprenant :
• un corps métallique (2),
• un doigt (3) monté mobile en rotation à une première extrémité (2a) du corps métallique (2) entre une position fermée et une position ouverte du mousqueton (1), le doigt (3) étant en contact avec une deuxième extrémité (2b) du corps métallique (2) lorsque le mousqueton (1) est en position fermée,
• une barrette de séparation (5) fixée au corps métallique (2) et configurée de manière à définir deux zones de confinement distinctes, le mousqueton (1) étant **caractérisé en ce que**
• la barrette de séparation (5) est montée sur le corps métallique (2) en des première et seconde extrémités opposées de la barrette de séparation (5),
• la première extrémité comporte un premier organe de fixation (5a) entourant le corps métallique (2) et la deuxième extrémité comporte un deuxième organe de fixation (5b) entourant le corps métallique (2), le premier organe de fixation (5a) et le deuxième organe de fixation (5b) entourant complètement le corps métallique (2),
• la barrette de séparation (5) étant configurée pour autoriser l'ouverture du doigt (3) lorsque les premier et deuxième organes de fixation (5a, 5b) entourent complètement le corps métallique (2)
• le premier organe de fixation (5a) est configuré pour que la première extrémité de la barrette de séparation (5) soit montée clipsable sur le corps métallique (2),
• le deuxième organe de fixation (5b) est configuré pour que la deuxième extrémité de la barrette de séparation (5) soit montée clipsable sur le corps métallique (2) ou le deuxième organe de fixation (5b) définit un anneau dépourvu de moyen d'ouverture dudit anneau.

2. Mousqueton (1) selon la revendication 1, dans lequel le premier et/ou le deuxième organes de fixation (5a, 5b) sont monoblocs.

3. Mousqueton (1) selon l'une quelconque des revendications 1 ou 2, dans lequel le premier organe de fixation (5a) et/ou le deuxième organe de fixation (5b) sont munis d'un dispositif anti-rotation relativement au corps métallique (2).

4. Mousqueton (1) selon la revendication 3, dans lequel le premier organe de fixation (5a) et/ou le deuxième organe de fixation (5b) comportent respectivement des premier et deuxième évidements (6a, 6b) ayant une forme complémentaire de celle du corps métallique (2).

5. Mousqueton (1) selon la revendication 4, dans lequel le premier organe de fixation (5a) comporte une première entrée (7a) apte à permettre l'introduction du corps métallique (2) dans le premier évidement (6a) du premier organe de fixation (5a) de sorte à permettre le clipsage de la barrette de séparation (5) sur le corps métallique (2) par déformation élastique du premier organe de fixation (5a).

6. Mousqueton (1) selon la revendication 5, dans lequel la barrette de séparation (5) comporte au moins un premier trou (9a) d'axe orthogonal à la première entrée (7a) et dans lequel le mousqueton (1) comporte au moins un premier élément de connexion (8a) apte à coopérer avec le premier trou (9a) de sorte à fermer la première entrée (7a) et maintenir fixement la barrette de séparation (5) sur le corps métallique (2).

7. Mousqueton (1) selon l'une quelconque des revendications 5 ou 6, dans lequel la première entrée (7a) est définie par une fente faisant face à une partie interne du corps métallique (2)

8. Mousqueton (1) selon la revendication 4, dans lequel le deuxième organe de fixation (5b) comporte une deuxième entrée (7b) apte à permettre l'introduction du corps métallique (2) dans le deuxième évidement (6b) du deuxième organe de fixation (5b), de sorte à permettre le clipsage de la barrette de séparation (5) sur le corps métallique (2) par déformation élastique du deuxième organe de fixation (5b).

9. Mousqueton (1) selon la revendication 8, dans lequel la barrette de séparation (5) comporte au moins un deuxième trou (9b) d'axe orthogonal à la deuxième entrée (7b), et dans lequel le mousqueton (1) comporte au moins un deuxième élément de connexion (8b) apte à coopérer avec le deuxième trou (9b), de sorte à fermer la deuxième entrée (7b) et maintenir fixement la barrette de séparation (5) sur le corps métallique (2).

10. Mousqueton (1) selon les revendications 6 et 9, dans lequel les premier et deuxième éléments de connexion (8a, 8b) sont choisis parmi les vis, les rivets ou les goujons à sertir.

11. Mousqueton (1) selon l'une quelconque des revendications 6, 9 et 10, dans lequel une zone en saillie est disposée d'un premier côté des première et/ou deuxième entrées (7a, 7b) et configurées pour coopérer avec un trou disposé dans un deuxième côté opposé des première et/ou deuxième entrées (7a, 7b) pour fermer les première et/ou deuxième entrées (7a, 7b) par clipsage.

12. Mousqueton (1) selon l'une quelconque des revendications 1 à 11, dans lequel la barrette de séparation (5) comporte une partie centrale (5c) connectant les premier et deuxième organes de fixation (5a, 5b), la partie centrale (5c) étant configurée pour servir d'appui au doigt (3) lorsque le doigt (3) est en butée contre une partie centrale (2c) du corps métallique (2).

13. Système d'assurage comportant un mousqueton (1) selon l'une quelconque des revendications 1 à 12 et un assureur (4).

14. Procédé de mise en place d'un dispositif de sécurité (4) sur un mousqueton (1) selon l'une quelconque des revendications 1 à 12, comportant les étapes suivantes :
• Fournir le mousqueton (1) selon l'une quelconque des revendications 1 à 12 connecté à un trou de connexion du dispositif de sécurité,
• introduire le corps métallique (2) dans les premier et deuxième organes de fixation (5a, 5b) de sorte à clipser la barrette de séparation (5) sur le mousqueton (1) et confiner un dispositif de sécurité (4) dans une zone prédéfinie.

15. Procédé selon la revendication 14, dans lequel le mousqueton (1) est selon la combinaison des revendications 6 et 9 et comportant en plus :
• fermer les premier et deuxième organes de fixation (5a, 5b) au moyen d'éléments de connexion (8a, 8b).

## Patentansprüche

1. Karabiner (1) mit Trennsteg, umfassend:
• einen metallischen Körper (2),
• einen Finger (3), der drehbeweglich an einem ersten Ende (2a) des metallischen Körpers (2) zwischen einer geschlossenen Position und einer offenen Position des Karabiners (1) montiert ist, wobei der Finger (3) mit einem zweiten Ende (2b) des metallischen Körpers (2) in Kontakt ist, wenn der Karabiner (1) in geschlossener Position ist,
• einen Trennsteg (5), der am metallischen Körper (2) befestigt und eingerichtet ist, um zwei getrennte Eingrenzungszonen zu definieren,
wobei der Karabiner (1) **dadurch gekennzeichnet ist, dass**
• der Trennsteg (5) auf dem metallischen Körper (2) an ersten und zweiten gegenüberliegenden Enden des Trennstegs (5) montiert ist,
• das erste Ende umfasst ein erstes Befestigungselement (5a), das den metallischen Körper (2) umgibt, und das zweite Ende umfasst ein zweites Befestigungselement (5b), das den metallischen Körper (2) umgibt, wobei das erste Befestigungselement (5a) und das zweite Befestigungselement (5b) den metallischen Körper (2) vollständig umgeben,
• der Trennsteg (5) eingerichtet ist, um das Öffnen des Fingers (3) zu gestatten, wenn die ersten und zweiten Befestigungselemente (5a, 5b) den metallischen Körper (2) zur Gänze umgeben,
• das erste Befestigungselement (5a) eingerichtet ist, dass das erste Ende des Trennstegs (5) anklipsbar auf dem metallischen Körper (2) montiert ist,
• das zweite Befestigungselement (5b) eingerichtet ist, dass das zweite Ende des Trennstegs (5) anklipsbar auf dem metallischen Körper (2) montiert ist, oder das zweite Befestigungselement (5b) einen Ring definiert, der kein Mittel zum Öffnen des Rings aufweist.

2. Karabiner (1) nach Anspruch 1, bei dem das erste und/oder das zweite Befestigungselement (5a, 5b) einstückig sind.

3. Karabiner (1) nach einem der Ansprüche 1 oder 2, bei dem das erste Befestigungselement (5a) und/oder das zweite Befestigungselement (5b) mit einer Drehsicherungsvorrichtung in Bezug zum metallischen Körper (2) versehen sind.

4. Karabiner (1) nach Anspruch 3, bei dem das erste Befestigungselement (5a) und/oder das zweite Befestigungselement (5b) erste bzw. zweite Ausnehmungen (6a, 6b) mit einer zu jener des metallischen Körpers (2) komplementären Form umfassen.

5. Karabiner (1) nach Anspruch 4, bei dem das erste Befestigungselement (5a) einen ersten Eingang (7a) umfasst, der geeignet ist, die Einführung des metallischen Körpers (2) in die erste Ausnehmung (6a) des ersten Befestigungselements (5a) zu ermöglichen, um das Anklipsen des Trennstegs (5) an den metallischen Körper (2) durch elastische Verformung des ersten Befestigungselements (5a) zu ermöglichen.

6. Karabiner (1) nach Anspruch 5, bei dem der Trennsteg (5) mindestens ein erstes Loch (9a) mit einer orthogonalen Achse zum ersten Eingang (7a) umfasst, und wobei der Karabiner (1) mindestens ein erstes Anschlusselement (8a) umfasst, das geeignet ist, mit dem ersten Loch (9a) zusammenzuwirken, um den ersten Eingang (7a) zu schließen und den Trennsteg (5) fest auf dem metallischen Körper (2) zu halten.

7. Karabiner (1) nach einem der Ansprüche 5 oder 6, bei dem der erste Eingang (7a) durch einen Schlitz definiert ist, der einem inneren Teil des metallischen Körpers (2) gegenüberliegt.

8. Karabiner (1) nach Anspruch 4, bei dem das zweite Befestigungselement (5b) einen zweiten Eingang (7b) umfasst, der geeignet ist, die Einführung des metallischen Körpers (2) in die zweite Ausnehmung (6b) des zweiten Befestigungselements (5b) zu ermöglichen, um das Anklipsen des Trennstegs (5) an den metallischen Körper (2) durch elastische Verformung des zweiten Befestigungselements (5b) zu ermöglichen.

9. Karabiner (1) nach Anspruch 8, bei dem der Trennsteg (5) mindestens ein zweites Loch (9b) mit einer orthogonalen Achse zum zweiten Eingang (7b) umfasst, und wobei der Karabiner (1) mindestens ein zweites Anschlusselement (8b) umfasst, das geeignet ist, mit dem zweiten Loch (9b) zusammenzuwirken, um den zweiten Eingang (7b) zu schließen und den Trennsteg (5) fest auf dem metallischen Körper (2) zu halten.

10. Karabiner (1) nach den Ansprüchen 6 und 9, bei dem die ersten und zweiten Anschlusselemente (8a, 8b) unter den Schrauben, Nieten oder Stanzbolzen ausgewählt sind.

11. Karabiner (1) nach einem der Ansprüche 6, 9 und 10, bei dem eine vorspringende Zone auf einer ersten Seite der ersten und/oder zweiten Eingänge (7a, 7b) angeordnet und eingerichtet ist, um mit einem Loch, das in einer zweiten, den ersten und/oder zweiten Eingängen (7a, 7b) gegenüberliegenden Seite angeordnet ist, zusammenzuwirken, um die ersten und/oder zweiten Eingänge (7a, 7b) durch Anklipsen zu schließen.

12. Karabiner (1) nach einem der Ansprüche 1 bis 11, bei dem der Trennsteg (5) einen Mittelteil (5c) umfasst, der die ersten und zweiten Befestigungselemente (5a, 5b) verbindet, wobei der Mittelteil (5c) eingerichtet ist, um als Stütze für den Finger (3) zu dienen, wenn der Finger (3) an einem Mittelteil (2c) des metallischen Körpers (2) am Anschlag ist.

13. Sicherungssystem, umfassend einen Karabiner (1) nach einem der Ansprüche 1 bis 12 und ein Sicherungsgerät (4).

14. Verfahren zum Anbringen einer Sicherheitsvorrichtung (4) auf einem Karabiner (1) nach einem der Ansprüche 1 bis 12, umfassend die folgenden Schritte:
• Bereitstellen des Karabiners (1) nach einem der Ansprüche 1 bis 12, der an ein Anschlussloch der Sicherheitsvorrichtung angeschlossen ist,
• Einführen des metallischen Körpers (2) in die ersten und zweiten Befestigungselemente (5a, 5b), um den Trennsteg (5) an den Karabiner (1) zu klipsen, und Eingrenzen einer Sicherheitsvorrichtung (4) in einer vordefinierten Zone.

15. Verfahren nach Anspruch 14, bei dem der Karabiner (1) nach der Kombination der Ansprüche 6 und 9 ausgeführt ist und ferner umfasst:
• Verschluss der ersten und zweiten Befestigungselemente (5a, 5b) mit Hilfe von Anschlusselementen (8a, 8b).

## Claims

1. Carabiner (1) with a bar, comprising:
• a metal body (2),
• a gate (3) mounted movable in rotation at a first end (2a) of the metal body (2) between a closed position and an open position of the carabiner (1), the gate (3) being in contact with a second end (2b) of the metal body (2) when the carabiner (1) is in closed position,
• a separation bar (5) fastened to the metal body and configured to define two distinct confinement areas,
the carabiner (1) being **characterized in that**
• the separation bar (5) is assembled onto the metal body (2) at first and second opposite ends of the separation bar (5),
• the first end comprises a first fastener (5a) surrounding the metal body (2), and the second end of the separation bar (5) comprises a second fastener (5b) surrounding the metal body (2), the first fastener (5a) and the second fastener (5b) totally surrounding the metal body (2),
• the separation bar (5) being configured to authorize opening of the gate (3) when the first and second fasteners (5a, 5b) totally surround the metal body (2),
• the first fastener (5a) is configured so that the first end of the separation bar (5) is assembled by clipping onto the metal body (2), and
• the second fastener (5b) is configured so that the second end of the separation bar (5) is assembled by clipping onto the metal body (2) or the second fastener (5b) defines a ring having no means for opening said ring.

2. Carabiner (1) according to claim 1, wherein the first and/or the second fasteners (5a, 5b) are one-piece.

3. Carabiner (1) according to any of claims 1 and 2, wherein the first fastener (5a) and/or the second fastener (5b) are provided with a device preventing a rotation relative to the metal body (2).

4. Carabiner (1) according to claim 3, wherein the first fastener (5a) and/or second fastener (5b) respectively comprise first and second hollow sections (6a, 6b) having a shape complementary to that of the metal body (2).

5. Carabiner (1) according to claim 4, wherein the first fastener (5a) comprises a first entrance (7a) enabling to introduce the metal body (2) into the first hollow section (6a) of the first fastener (5a) to allow a clipping of the separation bar (5) onto the metal body (2) by elastic deformation of the first fastener (5a).

6. Carabiner (1) according to claim 5, wherein the separation bar (5) comprises at least one first hole (9a) having an axis orthogonal to the first entrance (7a) and wherein the carabiner (1) comprises at least one first connection element (8a) capable of cooperating with the first hole (9a) to close the first entrance (7a) and firmly hold the bar (5) on the metal body (2).

7. Carabiner (1) according to any of claims 5 or 6, wherein the first entrance (7a) is defined by a slot facing an inner portion of the metal body (2).

8. Carabiner (1) according to claim 4, wherein the second fastener (5b) comprises a second entrance (7b) enabling to introduce the metal body (2) into the second hollow section (6b) of the second fastener (5b) to allow a clipping of the separation bar (5) onto the metal body (2) by elastic deformation of the second fastener (5b).

9. Carabiner (1) according to claim 8, wherein the separation bar (5) comprises at least one second hole (9b) having an axis orthogonal to the second entrance (7b) and wherein the carabiner (1) comprises at least one second connection element (8b) capable of cooperating with the second hole (9b) to close the second entrance (7b) and firmly hold the bar (5) on the metal body (2).

10. Carabiner (1) according to claims 6 and 9, wherein the first and second connection elements (8a, 8b) are selected from among screws, rivets, or self-clinching studs.

11. Carabiner (1) according to any of claims 6, 9 and 10, wherein a protruding area is arranged on a first side of the first and/or second entrances (7a, 7b) and configured to cooperate with a hole arranged in a second opposite side of the first and/or second entrances (7a, 7b) to close the first and/or second entrances (7a, 7b) by clipping.

12. Carabiner (1) according to any of claims 1 to 11, wherein the separation bar (5) comprises a central portion (5c) connecting the first and second fasteners (5a, 5b), the central portion (5c) being configured so that the gate (3) can bear against the central portion (5c) when the gate (3) abuts against a central portion (2c) of the metal body (2).

13. Belay system comprising a carabiner (1) according to any of claims 1 to 12 and a belay device (4).

14. Method of installing a safety device (4) on a carabiner (1) according to any of claims 1 to 12, comprising the following steps of:
• providing the carabiner (1) according to any of claims 1 to 12 connected to a connection hole of the safety device,
• introducing the metal body (2) into the first and second fasteners (5a, 5b) to clip the separation bar (5) onto the carabiner (1) and confine the safety device (4) in a predefined area.

15. Method according to claim 14, wherein the carabiner (1) is according to the combination of claims 6 and 9 and further comprising:
• closing the first and second fasteners (5a, 5b) by means of connection elements (8a, 8b).
